# EUROPEAN PATENT SPECIFICATION

(11) **EP 0 319 132 B1**
(45) Date of publication and mention of the grant of the patent: **03.01.1996**
(21) Application number: 88309481.5
(22) Date of filing: 11.10.1988
(51) Int. Cl.: G06F 9/38

(54) **Interrupt handling in a parallel data processing**
Unterbrechungsabwicklung in einem parallelen Datenverarbeitungssystem
Traitement des interruptions dans un système de traitement de données parallèle

(30) Priority: 30.11.1987 US 126818
(43) Date of publication of application: 07.06.1989
(73) Proprietor: International Business Machines Corporation, Armonk, N.Y. 10504 (US)
(72) Inventor: Grohoski, Gregory Frederick, Cedar Park Texas 78613 (US)
(74) Representative: Burt, Roger James, Dr.

(56) References cited:
- CONF. PROC. THE 12TH ANNUAL INT. SYMPOSIUM ON COMPUTER ARCHITECTURE June 19, 1985, BOSTON, US pages 36-44; J.E. SMITH ET AL.: 'Implementation of precise interrupts in pipelined processors'
- IBM TECHNICAL DISCLOSURE BULLETIN. vol. 27, no. 5, October 1984, NEW YORK US pages 2757-2759; W.C. BRANTLEY ET AL.: 'Exception handling in a highly overlapped machine'

## Description

This invention relates to interrupt handling in a parallel data processing system.

Traditional processors execute instructions in a serial fashion, i.e., one instruction at a time. In order to increase the operating efficiency and speed of execution of data processing systems, parallel processing has been implemented. Parallel processing provides for the concurrent execution of instructions. However, it is desirable to concurrently execute the instructions in such a manner that they will appear to be serially executed. The use of multiple execution units in a data processing system provide execution of instructions concurrently when several instructions can be distributed or dispatched to individual execution units for simultaneous execution during a time period or cycle. An instruction dispatching apparatus is required to determine which instructions should be dispatched to which execution units. An example of one such dispatching apparatus is disclosed in the IBM Technical Disclosure Bulletin, Volume 29, No. 1, June, 1986, entitled "Branch-Processing Instruction Cache", pages 357-359. This disclosure illustrates a mechanism for fetching instructions and includes the capability to process branch instructions while other instructions are being fetched.

One problem that arises in the parallel concurrent processing of instructions is the handling of an instruction generated interrupt in a manner that will maintain the appearance of serial instruction execution.

An article entitled "Implementation of Precise Interrupts in Pipelined Processors" appearing on pages 36-44 of the Conference Proceedings of the 12th Annual International Symposium on Computer Architecture, June 1985, Boston, describes a technique for recovering from certain types of interrupt signals that may occur when processing instructions in a pipelined arrangement. Instructions can be completed in any order, but a record for each instruction is made containing enough state information to enable a precise state to be restored in the event of such an interrupt signal.

It is an object of the present invention to provide an improved mechanism for handling interrupts while providing for the concurrent execution of instructions.

In accordance with the present invention, there is provided a data processing system for executing a sequence of instructions, the data processing system comprising: a plurality of processors, each for executing instructions; means for dispatching each of the instructions to one of the processors; control means for directing the concurrent execution of the dispatched instructions in the plurality of processors irrespective of locations of the instructions in the sequence, the control means including interrupt handling means for receiving an instruction interrupt signal, and for resetting the plurality of processors and the dispatching means to a state that existed when the instruction that caused the interrupt signal was earlier executed, in order to re-execute the instruction sequence from the instruction that caused the interrupt signal; the system being characterised in that the control means comprises: one or more backup registers connectable to corresponding processor registers in at least one of said processors, said backup registers being arranged to store previous contents of the processor registers if the contents of the processor registers are updated during execution of the instructions; a storage means for storing entries relating to instructions issued by the dispatching means, each entry being arranged to include address information for a plurality of instructions issued simultaneously by the dispatching means, and an indication whether changes to the contents of the processor registers have occurred during the execution of said plurality of instructions, the address information including a base address indicating the address of a first of the plurality of instructions, and an offset field indicating the location relative to the first instruction of any of the plurality of instructions that might generate an interrupt signal; the interrupt handling means being responsive to receipt of an interrupt signal to access the storage means to obtain the address of the instruction causing the interrupt signal by using the offset field data as offsets to the base address, and to then provide this address to one of the processors; the interrupt handling means also causing contents in the backup registers to be provided to their corresponding processor registers if the entry in the storage means indicates that those processor register contents have been changed during the execution of the plurality of instructions.

As disclosed hereinafter, an embodiment of the invention comprises a data processing system for executing a sequence of instructions including several processors, each for executing instructions. Also included is a dispatching apparatus for dispatching each of the instructions to one of the processors. A control apparatus is included for directing the concurrent execution of the dispatched instructions in the processors irrespective of the locations of the instructions in the sequence. The control apparatus includes the capability to receive an instruction interrupt signal. Upon receiving the instruction interrupt signal, the control apparatus determines which instruction execution generated the instruction interrupt. The control apparatus includes the capability to reset the processors and the dispatching apparatus to the state that existed when the instruction that generated the instruction interrupt signal was first executed in order to re-execute the instruction that caused the interrupt.

In the disclosed embodiment, the control apparatus includes the capability to maintain a history of which instructions were dispatched to which processors. The control apparatus further maintains a record of the contents of selected registers. Upon the occurrence of an interrupt signal, the control apparatus is able to determine the state of these registers and the state of the processors that existed at the time the instruction was first executed. The control apparatus then reinitialises all of the processors with the information that has been stored to place the processors and the instruction dispatching apparatus into the state that existed when the instruction that caused the interrupt was first executed.

The present invention will be described further by way of example with reference to the embodiment thereof referred to and as illustrated in the accompanying drawings, wherein:
Figure 1 is a block diagram of a parallel data processing system;
Figure 2 is a block diagram illustrating a portion of the data processing system of Figure 1;
Figure 3 is a block diagram illustrating portions of the program counter stack and the branch execution unit;
Figure 4 is a diagram illustrating the contents of the program counter stack entry;
Figure 5 is an illustration of the instruction registers and stack register contents during cycle zero;
Figure 6 is an illustration of the contents of the instruction registers and stack registers during cycle 1;
Figure 7 is an illustration of the contents of the instruction registers and stack registers during cycle 2;
Figure 8 is an illustration of the contents of the instruction registers and stack registers during cycle 3;
Figure 9 is an illustration of the contents of the instruction registers and stack registers during cycle 4;
Figure 10 is an illustration of the contents of the instruction registers and stack registers during cycle 5;
Figure 11 is an illustration of the contents of the instruction registers and stack registers during cycle 6;
Figure 12 is a flow chart illustrating the simultaneous execution of the stack addition function and the stack removal function;
Figure 13 is a flow chart illustrating the stack addition function; and
Figure 14 is a flow chart illustrating the stack removal function.

The disclosed arrangement provides a mechanism for the parallel and concurrent execution of several instructions while permitting interrupts to be processed in such a manner that the instruction execution will appear to be serial.

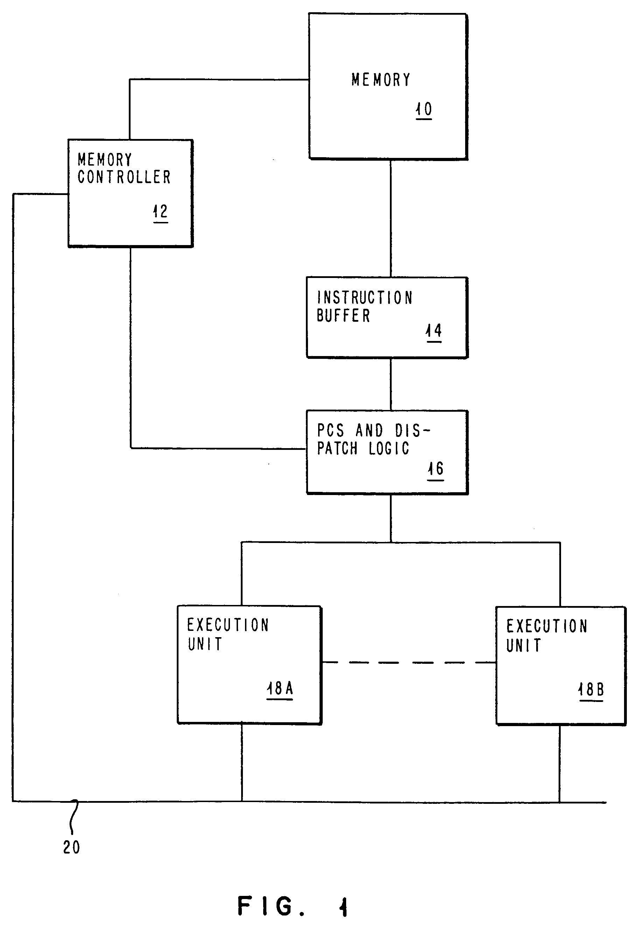

Figure 1 is a block diagram illustrating a data processing unit including a memory 10 connected to a memory controller 12 and instruction buffer 14. Connected to the instruction buffer 14 is a program counter stack and instruction dispatch logic 16. Several execution units 18a through 18d are in turn connected to the program counter stack and instruction dispatch logic 16. The execution units 18a through 18d are connected to an information bus 20 which provides for the distribution of information throughout the data processing system.

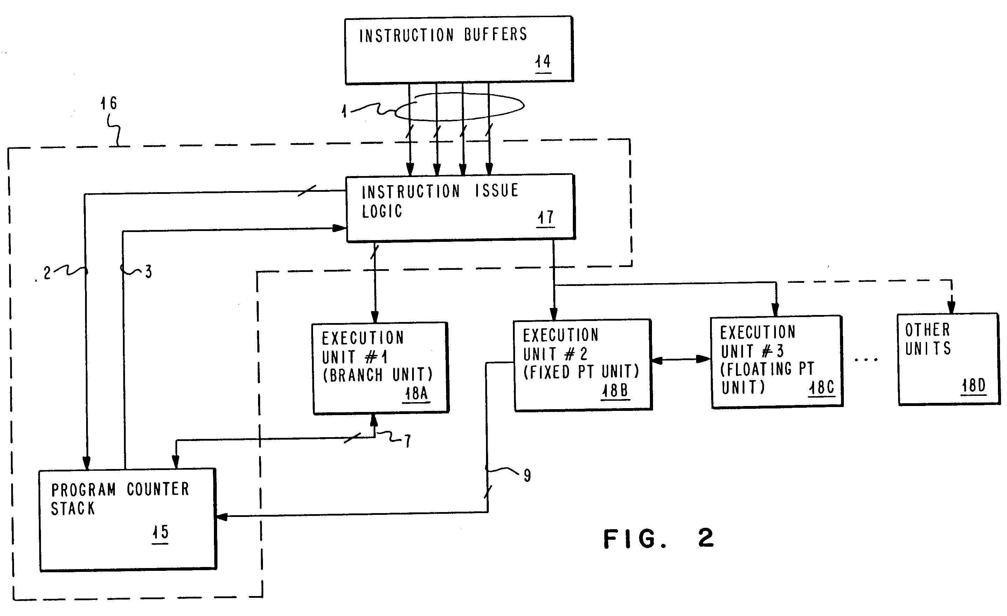

Figure 2 is a block diagram illustrating the instruction buffers 14 connected via bus lines 1 to instruction issue logic 17. The instruction issue logic 17 is further connected via buses 2 and 3 to the program control stack 15. The instruction issue logic 17 and the program counter stack 15 make up the block 16 of Figure 1. Also illustrated are instructions units 18a, 18b, 18c and 18d. It should be apparent to those skilled in the art that the number of execution units included may vary in accordance with the number of instructions to be concurrently executed. In the preferred embodiment, execution unit 18a executes branch instructions. Execution unit 18b executes fixed point arithmetic instructions. Execution unit 18c executes floating point arithmetic instructions. In this preferred embodiment, execution units 18a through 18c are the only ones that are functional.

The instruction buffer 14 stores a large group of instructions that are received from the memory 10 (Figure 1). The instruction issue logic 17 loads instructions from the instruction buffer 14 into the available execution units 18a through 18d. In the preferred embodiment, the instruction issue logic 17 can load four instructions simultaneously to the execution units 18a - 18d. The instruction issue logic 17 further determines which instruction goes to which execution unit and if the execution unit is able to take an instruction. Furthermore, the instruction issue logic 17 provides an input over lines 2 to the program counter stack. This input includes the record of the instructions dispatched. The program stack counter 15 provides a signal over line 3 to the instruction issue logic to stop the dispatching of instructions. This signal occurs when either an interrupt has been generated or when the stacks in the program counter 15 are full. The instructions from the instruction issue logic 17 are provided to the appropriate execution units. The branch execution unit 18a provides information to the program counter stack such as addresses and the values of certain registers over line 7. The fixed point arithmetic instruction execution unit 18b provides signals over line 9 indicating the completion of instructions or the occurrence of an instruction interrupt signal. The fixed point arithmetic instruction execution unit 18b further provides and receives signals from the floating point arithmetic instruction execution unit 18c over line 11. These signals over line 11 provide for synchronisation between the floating point and fixed point execution units for the execution of floating point load and store instructions. In this embodiment, the fixed point execution unit 18b completes address calculations floating point load and store instructions. The fixed point execution unit 18b then sends these addresses to memory. For store instructions, the fixed point unit 18b must know when the floating point unit 18c has completed execution of the instruction so that the fixed point unit 18b will know when data is ready to be stored and therefore, when the address is ready to be transmitted. Furthermore, the fixed point unit 18b signals the occurrence of interrupts to the floating point unit 18c so that it will disregard the current floating point unit instruction.

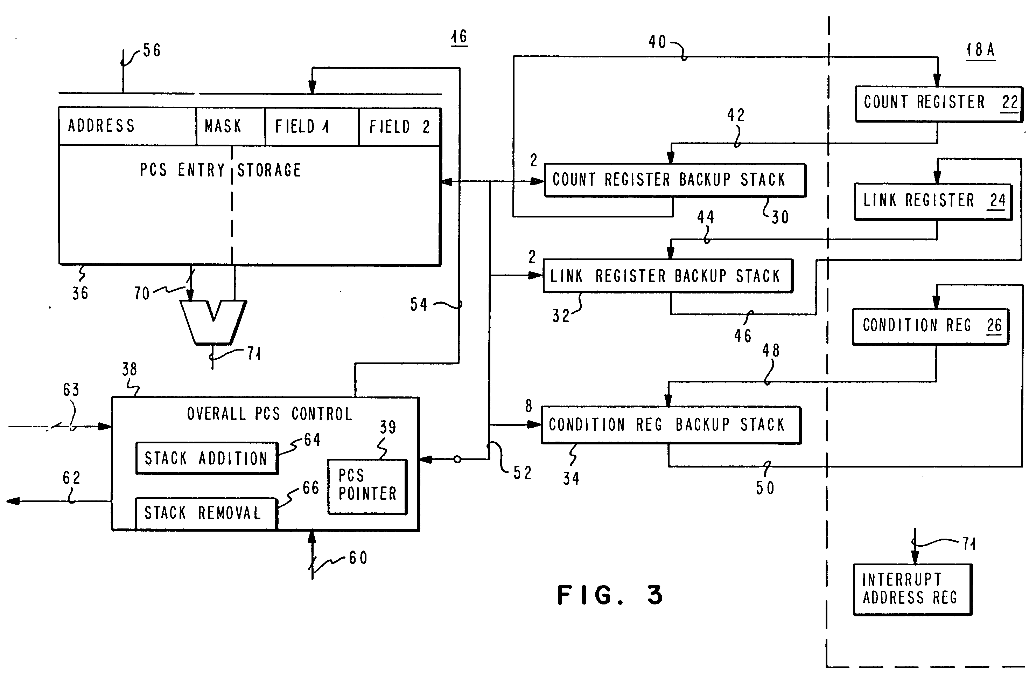

Figure 3 illustrates, in a more detailed fashion, the intercommunication between the branch unit 18a and the program counter stack 16. In Figure 3, the branch unit 18a is shown to contain the count register 22, the link register 24, the condition register 26, and the interrupt address register 28. The count register 22 maintains a count for the execution of loop instructions in the branch execution unit 18a. The link register 24 maintains the address for link operations such as the return from a subroutine call. The condition register 26 maintains the condition codes that result from comparison operations. The interrupt address register 28 receives the address of an instruction that has generated an interrupt. The count register 22 is connected by lines 40 and 42 to the count register backup stack 30 in the program counter stack 16. Likewise, the link register 24 is connected to the link register backup stack 32 by lines 44 and 46. Also, the condition register 26 is connected via lines 48 and 50 to the condition register backup stack 34. The interrupt address register 28 is connected via line 70 to an adder 75. The adder 75 produces the interrupt address for the interrupt register 28 via line 71. The contents of these registers 22, 24, 26 and 28 control the state of the execution of the branch execution unit 18a.

Since the occurrence of an interrupt will stop the execution of execution units 18b and 18c, the re-execution of an instruction by the branch execution unit 18a will reinitialise the execution of an instruction sequence at the instruction that generated the interrupt.

When the instruction issue logic 17 (Figure 2) issues four or less instructions in a cycle, the program counter storage entry storage table 36 is updated. The base address is provided on line 56. The mask and two fields are provided from line 54 from the program counter stack control 38. The program counter stack control 38 receives this information via line 63 from the instruction issue logic 17. Additionally, the program counter stack control 38 updates stack pointers 39 which contain head pointers and tail pointers for the three backup stacks 30, 32 and 34, and executes the stack removal and stack addition functions performed by the stack addition logic 64 and stack removal logic 66.

The program counter stack control 38 regulates the operation of the backup stacks 30, 32, and 34 by line 52. Furthermore, this control 38 provides the stop dispatch signals to the instruction issue logic 17 on line 62 and receives the instruction complete and interrupt signals from the fixed point execution unit 18b on line 60 as previously discussed.

The program counter stack entry storage 36 provides the address of the interrupting instruction on line 70 to the interrupt address register 28.

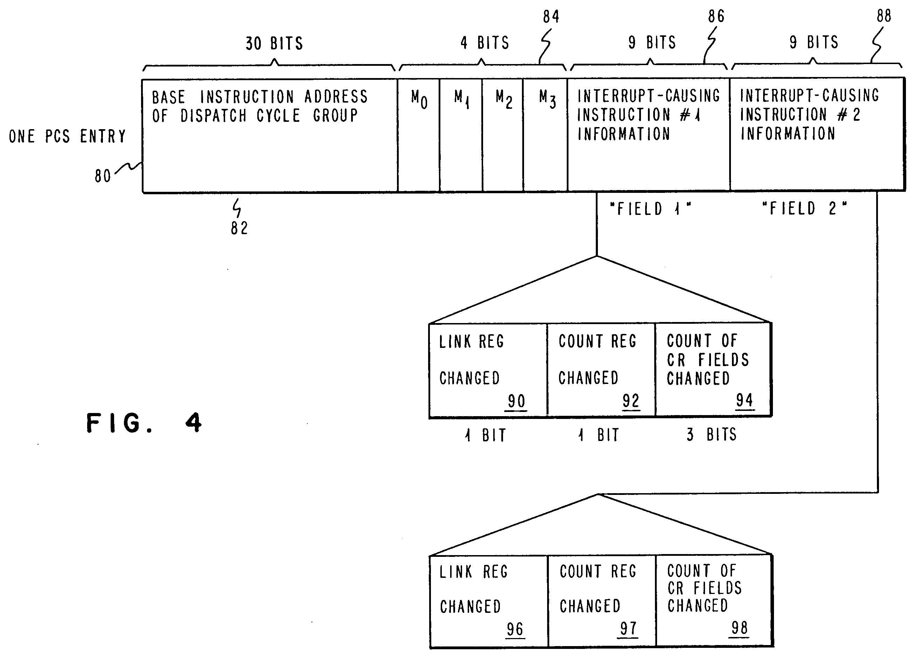

Figure 4 is an illustration of the contents of the program counter stack entry storage 36 (Figure 3). A single entry 80 is listed that includes the base instruction address field 82, the 4 bit mask field 84, the instruction 1 field 86 and the instruction 2 field 88. Field 82 is the address of the base instruction for the 4 instruction sequence that has been dispatched in the cycle by the instruction issue logic 17 (Figure 2). The mask field 84 indicates the position of any interrupt causing instructions in this 4 instruction group. In the present embodiment, only two instructions can cause interrupts in a 4 instruction group. Therefore, there are only two instruction fields 86 and 88 provided to record these instructions. The first instruction field 86 includes sub-fields 90, 92, and 94. Field 90 indicates whether the link register 24 has been changed. Field 92 indicates whether the count register 22 has been changed. Field 94 indicates whether the condition register 26 has been changed. In the preferred embodiment, field 90 and 92 contain 1 bit each. Field 94 contains 3 bits indicating the three separate portions of the condition register 26. Field 88 also contains fields similar to field 86 and are illustrated as fields 96, 97 and 98 that correspond to fields 90, 92 and 94 previously discussed.

The operation of this arrangement is best understood by an example illustration. The TABLE appended hereto lists twelve instructions that are to be dispatched for execution by the execution units. These instructions are divided up into three groups of four instructions each. For this example, the address of the first instruction is 1. Group I consisting of instructions 1 through 4 are dispatched in cycle 1.

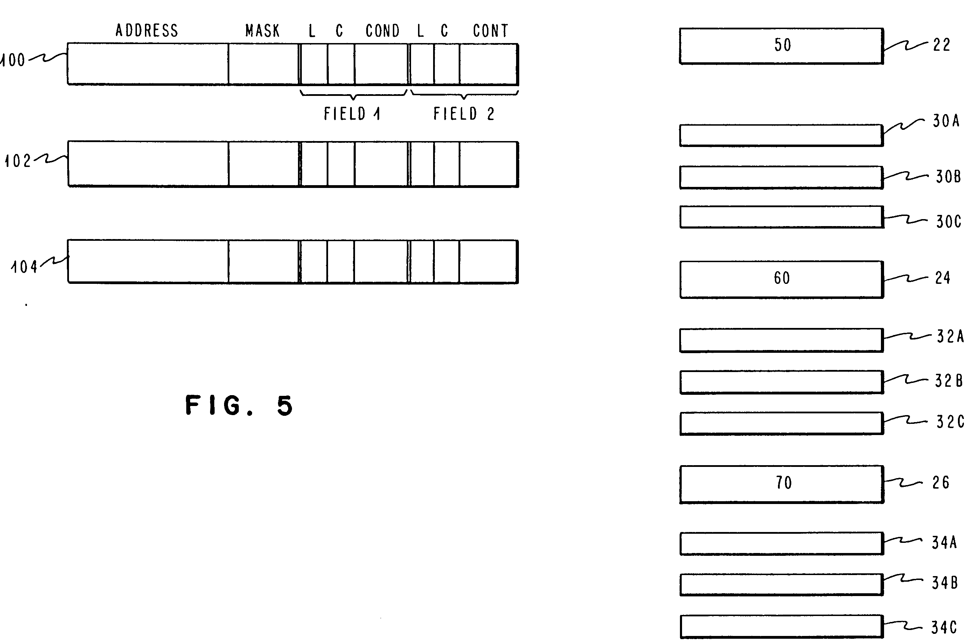

Figure 5 illustrates the contents of the program counter stack entry storage 36 consisting of entry positions 100, 102 and 104; the count register backup stack 30, consisting of entries 30a, 30b and 30c; the link register backup stack 32, consisting of entries 32a, 32b and 32c; and the condition register backup stack 34, consisting of entries 34a, 34b and 34c. Additionally, the initial contents of the count register 22, the link register 24 and the condition register 26 are illustrated as 50, 60 and 70 respectively. The actual value of these contents is arbitrary and is merely included to provide the reader with an aid to facilitate tracing of the entries through this example.

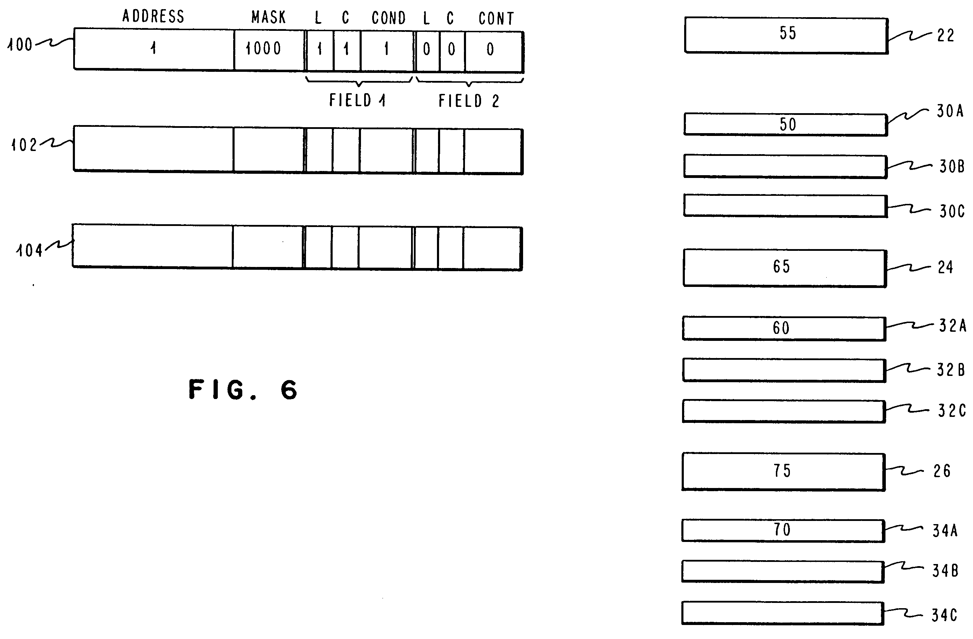

Referring to Figure 6, during cycle 1, instructions 1 through 4 are dispatched. Since a load instruction (instruction 1) was dispatched, one entry will be added to the program counter stack entry storage 36. In this embodiment, only load and store instructions may generate interrupts. The base address of "1" is stored. The mask value is 1000 denoting that the first instruction is the location of the instruction that might cause an interrupt. If two instructions were included in the four instruction group, 2 bits of the mask field would be set to 1. The location of the bits denotes the location of the interrupt causing instructions in the 4 instruction sequence. Therefore, the mask bit positions can be used as offsets to the base address to provide the actual addresses of the interrupt causing instructions. The contents of field 1 are set if the count register 22, the link register 24, and the condition register 26 contents are changed during the execution of this four instruction sequence. In this example, the branch instruction sets the count register 22 and link register 24. The LCR (logic on condition register) instruction sets the contents of the condition register 26. The previous contents of these registers are stored as shown.

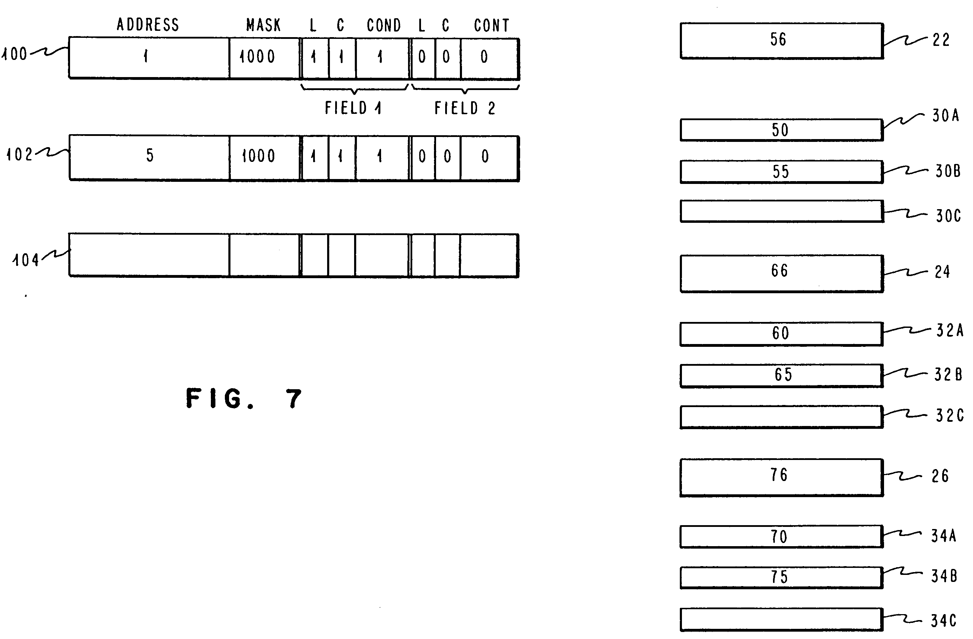

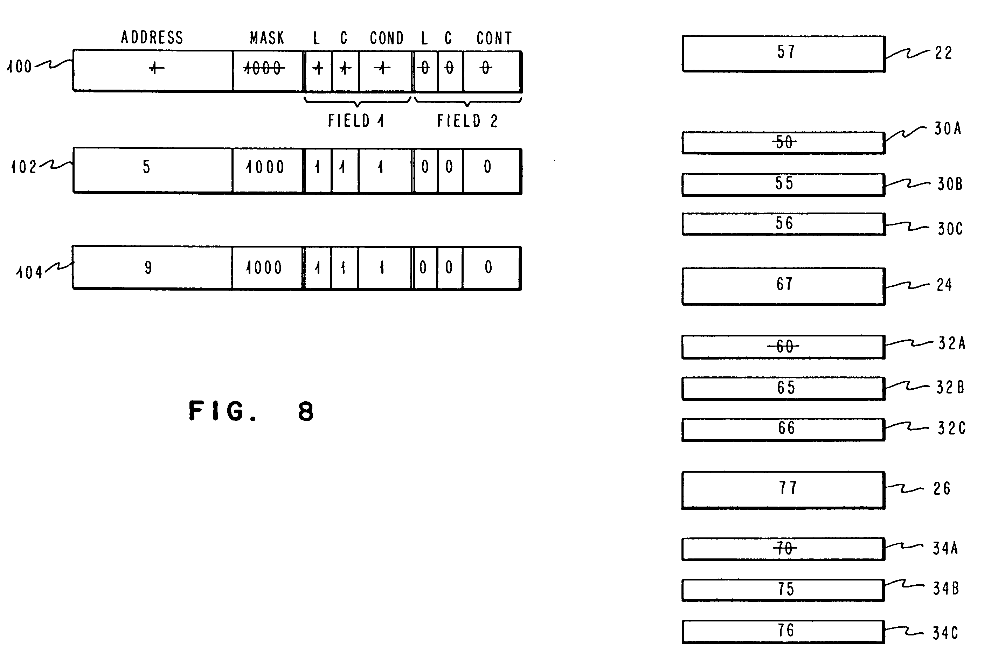

Figure 7 illustrates the status after cycle 2. In cycle 2, instructions 5 through 8 (group II of TABLE) are dispatched. Since group II is the exact same set of instructions as group I, the same actions occur to update the backup stacks respectively. Also, the execution of instructions 7 and 8 update the count register 22, the link register 24 and the condition register 26 as shown. The backup registers 30, 32 and 34 store the previous contents of the count register 22, the link register 24 and the condition register 26. Each cycle an interrupt causing instruction is dispatched a record of the dispatch cycle is written in to the program counter stack entry storage 36. If subsequent instructions cause the link register 24, the count register 22, or the condition register 26 to be updated, the old values of these registers are stored in the appropriate backup stacks and the respective tail pointers are incremented. There is a head and tail pointer for each backup stack. These pointers operate the three backup register locations as a circular queue. Therefore, each time an entry is made, the tail pointer is incremented. Each time an entry is removed, the head pointer is incremented. Figure 8 illustrates the contents of the registers at the end of cycle 3 when the group III instructions have been dispatched. For this example, during cycle 3, the fixed point unit 18b executes instruction 1. For this example, instruction 1 did not cause an interrupt. Since only one interrupt causing instruction was dispatched during this cycle (cycle 1), the entire entry 100 may be removed. Using information in field 1, the backup register entries 30a, 32a and 34a are also removed. This is accomplished by incrementing the head pointer as previously discussed. Since the group III instructions are similar to groups I and II, the program counter stack storage entry 104 is as shown. Likewise, the count register 22, the link register 24 and condition register 26 are provided with values 57, 67 and 77 respectively. The previous values of these registers are stored in the appropriate entries in their backup stacks 30, 32 and 34 as shown.

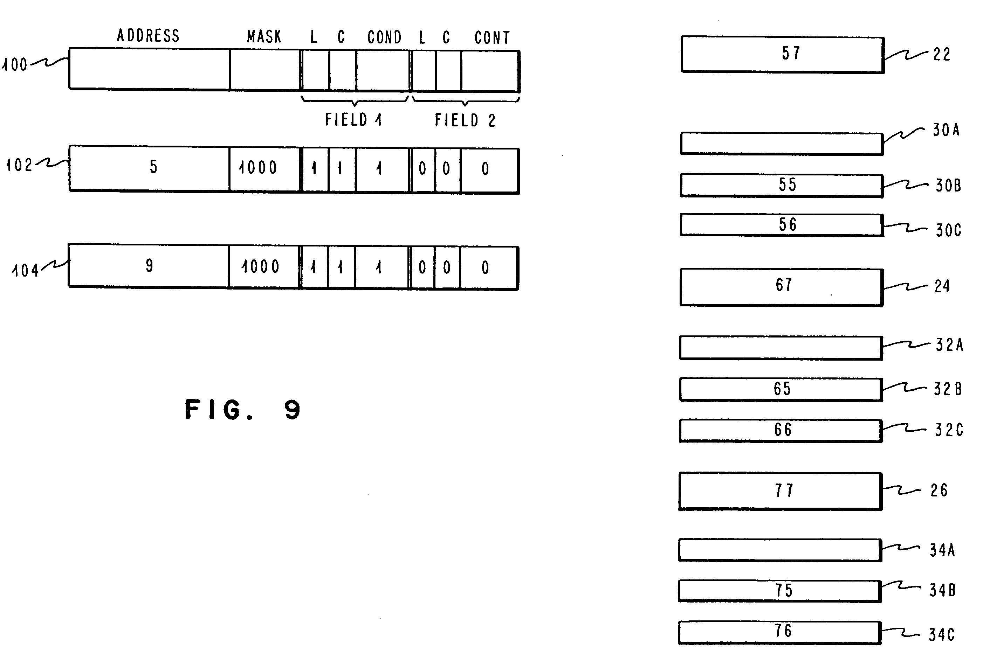

Figure 9 illustrates the contents of these registers at the end of cycle 4. For this example, in cycle 4 instruction 2 was executed by the fixed point unit 18b. Since it is not a load or store instruction, it cannot cause an interrupt. Therefore, no entries need to be removed from the program counter stack entry storage 36.

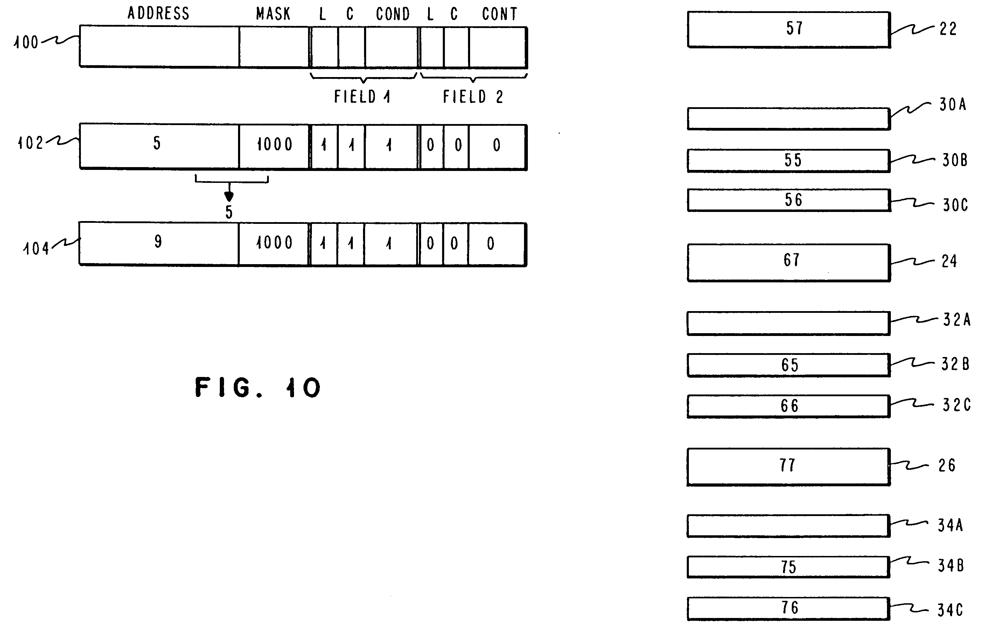

Figure 10 illustrates the contents of the register at the end of cycle 5. During cycle 5, the fixed point execution unit 18b has executed instruction 5. For this example, this instruction has caused an interrupt. In this case, the offset mask bits (1000) are combined with the base address (5) to determine the position of the instruction that caused the interrupt. In this example, the address is 5. Additionally, since the field 1 tag bits were set for the count register 22, the link register 24 and the condition register 26, the backup values for these registers are provided to these registers. These values are stored in entries 30b, 32b and 34b respectively. The address of the interrupting instruction is provided to the branch execution unit 18a. Likewise, the backup register contents are provided to their respective registers. The program counter stack entry storage 36 and backup stacks 30, 32 and 34 are then purged of all information since this stored information is no longer relevant and the system is being reinitialise to the state when the instruction at location 5 was executed.

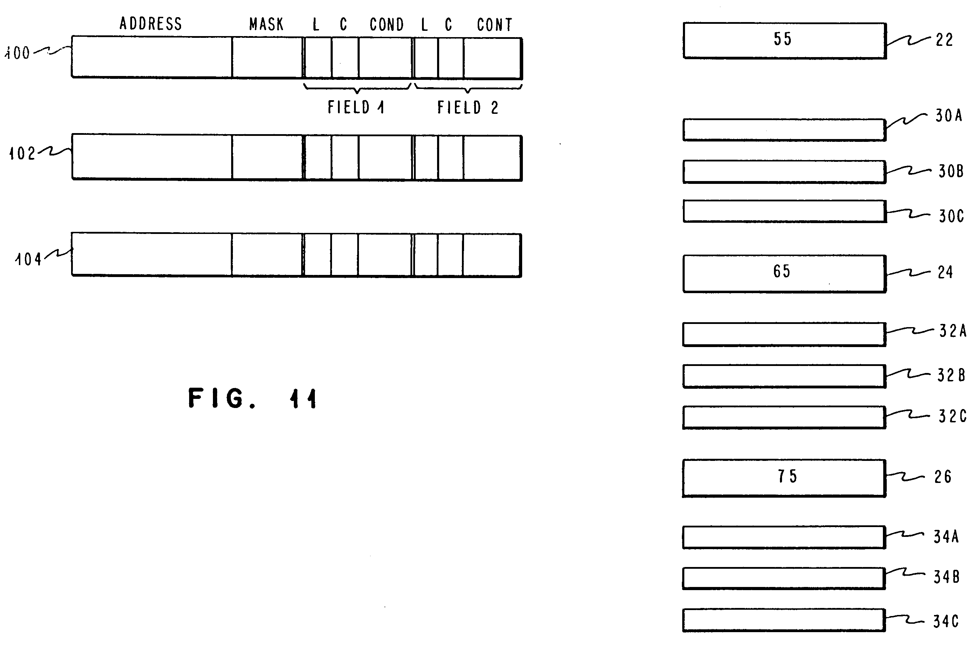

Figure 11 illustrates the register contents at the end of cycle 6 when the condition register 22, the link register 24 and the condition register 26 have been updated. At the end of cycle 6, the system has been reinitialised and is ready to start again the execution of the instruction sequence starting at instruction 5.

In this embodiment, if a single program counter stack entry contains two instructions that might generate interrupts, the interrupts are received on a first-in, first-out basis. In other words, when an interrupt occurs, the oldest instruction that might generate an interrupt is assumed to have generated this interrupt. However, it should be apparent that in other systems the oldest instruction is not necessarily the instruction that causes the interrupt. The system could then determine the instruction that caused the interrupt by a tag that would be provided by the occurrence of the interrupt.

Therefore, in Figure 11, the registers appear as if only instructions 1 through 4 have been executed.

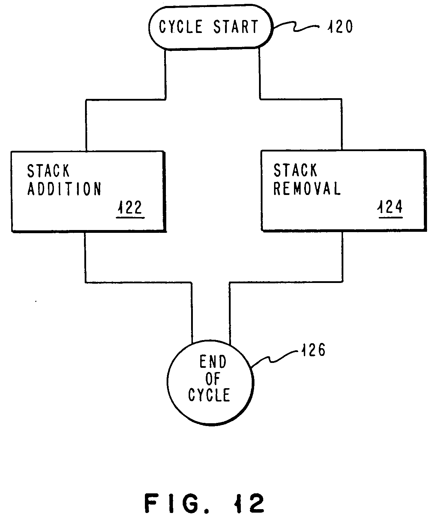

Figure 12 illustrates a state diagram depicting the concurrent execution of the stack addition function in logic 64 (state 122) and the execution of the stack removal function 124 in the stack removal logic 66. These functions 122 and 124 are executed during each cycle as depicted by states 120 and 126.

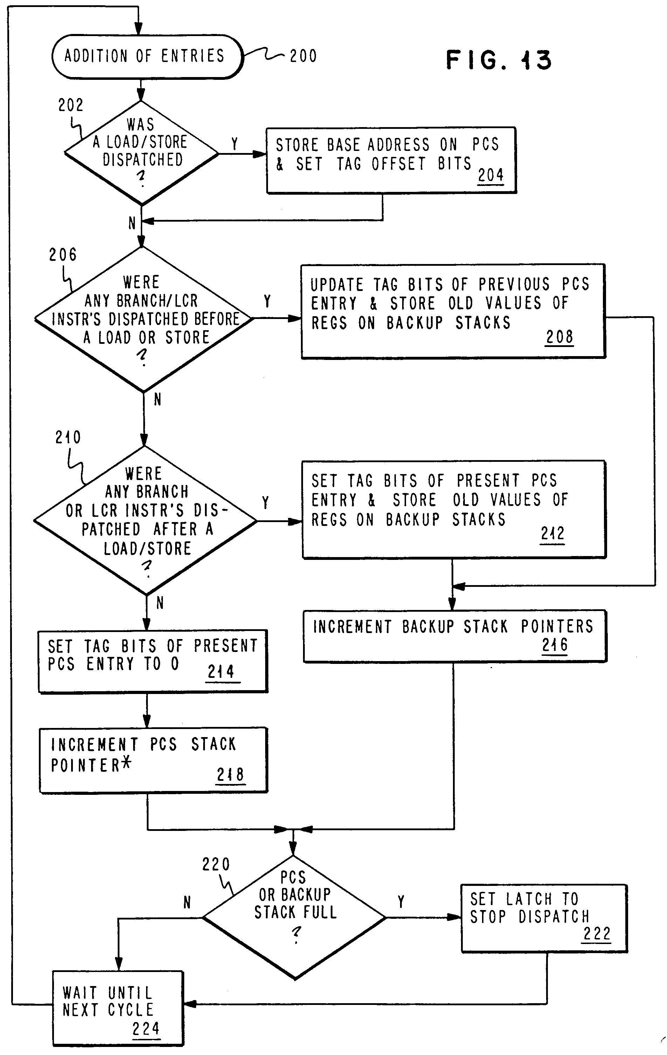

Figure 13 is a flow chart illustrating the stack addition function. At the beginning of the cycle, the stack addition logic 64 begins at step 200 and proceeds to step 202 to determine if a load or store instruction was dispatched. If so, the logic proceeds to step 204 to store the base address and set the tag offset bits of the program counter stack entry storage 36. If a load and store instruction was not dispatched or, after the base address and offset bits have been stored, the logic proceeds to step 206 to determine if any branch or LCR instructions were dispatched before a load or store instruction. If so, the tag bits of the previous program counter stack entry is updated and the old values of the count, link and condition registers are stored on the backup stacks. The program then proceeds to step 216. Returning to step 206, if no branch or LCR instructions were dispatched before a load or store instruction, the logic proceeds to step 210 to determine if any branch or LCR instructions were dispatched after a load or store instruction. If so, the logic proceeds to step 212 to set the tag bits of the present program counter storage entry and to store the old values on the backup stacks. Then in step 216, the backup stack pointers 39 are incremented. Returning to step 210, if no branch or LCR instructions were dispatched after a load or store instruction, the logic proceeds to step 214 to set the tag bits of the present program counter stack entry to zero. Then, in step 218, the pointer to the program counter stack entry is incremented if a load or store instruction was dispatched. Then in step 220, the logic determines if the program counter stack entry storage is full. If so, a latch is set in step 222 to send the stop dispatch signal to the instruction issue logic 17. In step 224, the logic 64 waits until the next cycle has occurred when it returns to step 200.

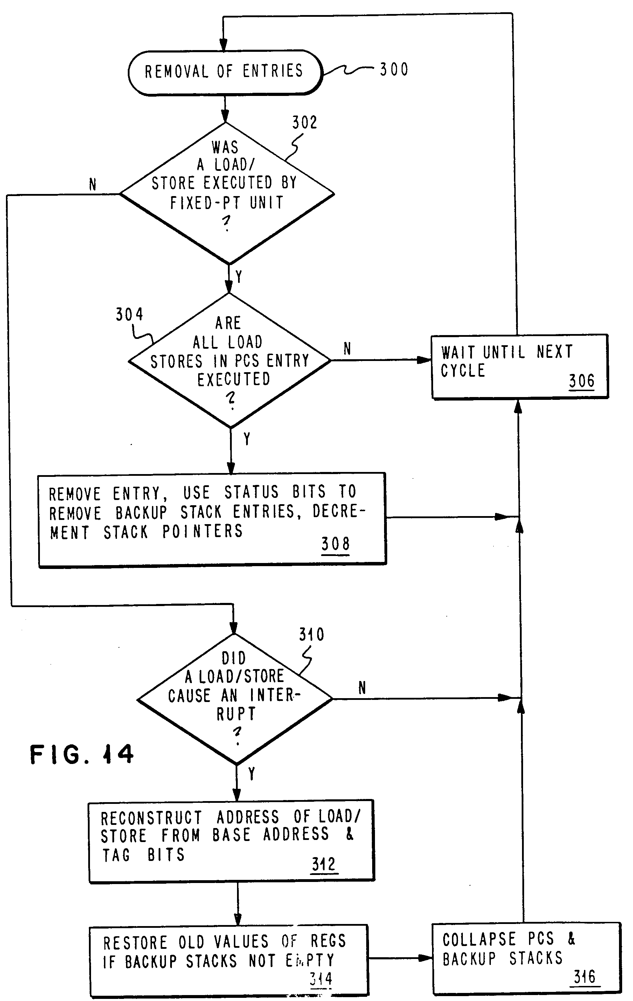

Figure 14 is a flow chart illustrating the stack removal procedure performed by logic 66. Upon the beginning of a cycle, the logic 66 moves from step 300 to step 302 to determine if a load or store instruction has been executed by the fixed point execution unit. If not, the logic proceeds to step 310. If so, the logic proceeds to step 304 to determine if all load and store instructions in the program counter stack entry storage were executed. If not, the program proceeds to step 306 to wait until the next cycle. If all of the load and store instructions for the entry were executed, the logic proceeds to step 308 to remove the entry and use the status bits to remove the backup stack entries and to decrement all of the pointers. Upon the completion of step 308, the logic proceeds to step 306 to wait for the next cycle.

Returning to step 310, the logic determines if a load or store instruction caused an interrupt. If not, the logic proceeds to step 306. If an interrupt has occurred, the logic proceeds to step 312 to reconstruct the address of the load and store instruction from the base address and tag bits in the program counter stack entry. Then, in step 314, the old values of the link 24, count 22 and condition registers 26 are stored if appropriate. In step 316, the contents of the program counter stack entry storage 36 and the respective backup registers are purged since these values would no longer be relevant. The logic 66 then proceeds to step 306 to wait for the next cycle.

While the invention has been described with reference to the one embodiment illustrated, it is not limited to the details thereof, particularly those arising from the kind of parallel processor selected for description and the kind a number of instructions which may cause interrupts therein or which may be dispatched as a group. Equally it is not limited to the illustrated mask and stack sizes which are dependent thereon.

**TABLE**

| GROUP I | | |
|---|---|---|
| 1. | L R1, ADDRESS 1 | * LOAD FXPT REG 1 FROM MEMORY |
| 2. | A R3, R2, R1 | * ADD R1 + R2 → R3 |
| 3. | BRANCH ADDRESS 2 | * BRANCH TO ADDRESS 2 |
| 4. | LCR B3, B2, B1 | * LOGIC-ON-CR- UPDATE CONDITION REGISTER |

| GROUP II | | |
|---|---|---|
| 5. | L R1, ADDRESS 1 | * LOAD FXPT REG 1 FROM MEMORY |
| 6. | A R3, R2, R1 | * ADD R1 + R2 → R3 |
| 7. | BRANCH ADDRESS 2 | * BRANCH TO ADDRESS 2 |
| 8. | LCR B3, B2, B1 | * LOGIC-ON-CR -UPDATE CONDITION REGISTER |

| GROUP III | | |
|---|---|---|
| 9. | L R1, ADDRESS 1 | * LOAD FXPT REG 1 FROM MEMORY |
| 10. | A R3, R2, R1 | * ADD R1 + R2 → R3 |
| 11. | BRANCH ADDRESS 2 | * BRANCH TO ADDRESS 2 |
| 12. | LCR B3, B2, B1 | * LOGIC-ON-CR -UPDATE CONDITION REGISTER |

## Claims

1. A data processing system for executing a sequence of instructions, the data processing system comprising:
a plurality of processors (18A-18D), each for executing instructions;
means (17) for dispatching each of the' instructions to one of the processors;
control means (16) for directing the concurrent execution of the dispatched instructions in the plurality of processors (18A-18D) irrespective of locations of the instructions in the sequence, the control means including interrupt handling means for receiving an instruction interrupt signal, and for resetting the plurality of processors (18A-18D) and the dispatching means (17) to a state that existed when the instruction that caused the interrupt signal was earlier executed, in order to re-execute the instruction sequence from the instruction that caused the interrupt signal;
the system being characterised in that the control means (16) comprises:
one or more backup registers (30, 32, 34) connectable to corresponding processor registers (22, 24, 26) in at least one of said processors (18A-18D), said backup registers being arranged to store previous contents of the processor registers if the contents of the processor registers are updated during execution of the instructions;
a storage means (36) for storing entries (80) relating to instructions issued by the dispatching means (17), each entry being arranged to include address information for a plurality of instructions issued simultaneously by the dispatching means (17), and an indication whether changes to the contents of the processor registers (22, 24, 26) have occurred during the execution of said plurality of instructions, the address information including a base address (82) indicating the address of a first of the plurality of instructions, and an offset field (84) indicating the location relative to the first instruction of any of the plurality of instructions that might generate an interrupt signal;
the interrupt handling means (38) being responsive to receipt of an interrupt signal to access the storage means (36) to obtain the address of the instruction causing the interrupt signal by using the offset field (84) data as offsets to the base address (82), and to then provide this address to one of the processors (18A-18D);
the interrupt handling means also causing contents in the backup registers (30, 32, 34) to be provided to their corresponding processor registers (22, 24, 26) if the entry in the storage means (36) indicates that those processor register contents have been changed during the execution of the plurality of instructions.

2. A system as claimed in Claim 1, wherein the control means (16) further comprises purging means to erase all information in the backup registers (30, 32, 34) and the storage means (36) prior to re-execution of the sequence of instructions from the instruction that caused the interrupt signal.

3. A system as claimed in Claim 1 or Claim 2, wherein an instruction field (86, 88) for each of said plurality of instructions that might generate an interrupt signal is included in the entry in the storage means (36) to provide the indication whether changes to the contents of the processor registers have occurred during the execution of said plurality of instructions.

4. A system as claimed in any of claims 1 to 3, wherein an entry in the storage means (36) is only made if one or more of the plurality of instructions issued simultaneously by the dispatching means (17) is of a type that might generate an interrupt signal.

5. A system as claimed in any preceding claim, further comprising entry removal means for, responsive to the plurality of instructions completing without an interrupt signal being generated, removing the associated entry in the storage means (36) and the associated entries in the backup registers (30, 32, 34).

6. A system as claimed in Claim 5, wherein the associated entries in the backup registers (30, 32, 34) are removed by incrementing head pointers to the backup registers.

7. A system as claimed in any preceding claim, wherein the interrupt handling means includes adder means for combining the base address (82) with the offset field (84) data to provide the address of the instruction causing the interrupt signal.

8. A system as claimed in any preceding claim, wherein the control means includes means for assigning an instruction record with a processor register record.

## Patentansprüche

1. Ein Datenverarbeitungssystem zur Ausführung einer Befehlssequenz, wobei das Datenverarbeitungssystem folgendes umfaßt:
eine Vielzahl von Prozessoren (18A-18D), jeweils zum Ausführen von Befehlen;
Mittel (17), um jeden der Befehle an einen der Prozessoren zu verteilen;
Steuermittel (16), um die gleichzeitige Ausführung der verteilten Befehle in der Vielzahl von Prozessoren (18A-18D) zu steuern, unabhängig von den Positionen der Befehle in der Befehlssequenz, wobei das Steuermittel Unterbrechungsabwicklungsmittel umfaßt, um ein Befehlsunterbrechungssignal zu empfangen, und um die Vielzahl von Prozessoren (18A-18D) und die Verteilmittel (17) in einen Zustand zurückzusetzen, der bestand, als der Befehl, der das Unterbrechungssignal verursachte, zuerst ausgeführt wurde, um die Befehlssequenz ab dem Befehl, der das Unterbrechungssignal verursachte, erneut auszuführen;
wobei das System dadurch gekennzeichnet ist, daß das Steuermittel (16) folgendes umfaßt:
ein oder mehrere Sicherungsregister (30, 32, 34), die mit entsprechenden Prozessor-Registern (22, 24, 26) in mindestens einem der genannten Prozessoren (18A-18D) verbunden werden können, wobei die genannten Sicherungsregister so angeordnet sind, daß die vorherigen Inhalte der Prozessor-Register gespeichert werden, wenn die Inhalte der Prozessor-Register während der Ausführung der Befehle aktualisiert werden;
ein Speichermittel (36) zum Speichern von Einträgen (80), die sich auf Befehle beziehen, die von dem Verteilmittel (17) ausgegeben werden, wobei jeder Eintrag so angeordnet ist, daß er Adresseninformationen für eine Vielzahl von Befehlen enthält, die von dem Verteilmittel (17) gleichzeitig ausgegeben werden, und eine Angabe darüber, ob an den Inhalten der Prozessor-Register (22, 24, 26) während der Ausführung der genannten Vielzahl von Befehlen Veränderungen stattfanden, wobei die Adresseninformation eine Basisadresse (82) umfaßt, die die Adresse eines ersten einer Vielzahl von Befehlen anzeigt, und ein Offset-Feld (84), das die Position eines jeden der Vielzahl von Befehlen, der ein Unterbrechungssignal erzeugen könnte, bezogen auf den ersten Befehl, anzeigt;
wobei das Unterbrechungsabwicklungs-Mittel (38) auf den Empfang eines Unterbrechungssignals reagiert und auf das Speichermittel (36) zugreift, um die Adresse des Befehls, der das Unterbrechungssignal verursachte, zu erhalten, indem es die Daten des Offset-Felds (84) als Offsets zu der Basisadresse (82) einsetzt und anschließend diese Adresse einem der Prozessoren (18A-18D) zur Verfügung stellt;
das Unterbrechungsabwicklungs-Mittel außerdem bewirkt, daß die Inhalte der Sicherungsregister (30, 32, 34) ihren jeweiligen Prozessor-Registern (22, 74, 26) bereitgestellt werden, wenn der Eintrag in dem Speichermittel (36) anzeigt, daß die Inhalte dieser Prozessor-Register im Verlauf der Ausführung der Vielzahl von Befehlen verändert wurden.

2. Ein System nach Anspruch 1, bei dem das Steuermittel (16) weiter Löschmittel umfaßt, um alle Informationen in den Sicherungsregistern (30, 32, 34) und dem Speichermittel (36) vor der erneuten Ausführung der Befehlssequenz ab dem Befehl, der das Unterbrechungssignal verursachte, zu löschen.

3. Ein System nach Anspruch 1 oder Anspruch 2, bei dem ein Befehlsfeld (86, 88) für einen jeden der genannten Vielzahl von Befehlen, die ein Unterbrechungssignal erzeugen könnten, in dem Eintrag des Speichermittels (36) enthalten ist, um anzuzeigen, ob die Inhalte der Prozessor-Register im Verlauf der Ausführung der genannten Vielzahl von Befehlen geändert wurden.

4. Ein System nach einem der Ansprüche 1 bis 3, bei dem ein Eintrag in das Speichermittel (36) nur dann erfolgt, wenn einer oder mehrere der Vielzahl von Befehlen, die gleichzeitig von dem Verteilmittel (17) ausgegeben werden, ein Befehlstyp ist, der ein Unterbrechungssignal verursachen könnte.

5. Ein System nach einem der vorangehenden Ansprüche, weiter umfassend Eintragsentfernungsmittel um, in Antwort darauf, daß die Vielzahl von Befehlen ausgeführt wird, ohne daß ein Unterbrechungssignal erzeugt wird, den betreffenden Eintrag in dem Speichermittel (36) und die betreffenden Einträge in den Sicherungsregistern (30, 32, 34) zu entfernen.

6. Ein System nach Anspruch 5, bei dem die zugehörigen Einträge in den Sicherungsregistern (30, 32, 34) entfernt werden, indem Kopfzeiger zu den Sicherungsregistern inkrementiert werde.

7. Ein System nach einem der vorangehenden Ansprüche, bei dem das Unterbrechungsabwicklungs-Mittel Addierer-Mittel enthält, um die Basisadresse (82) mit den Daten des off-set-Felds (84) zu verbinden, um die Adresse des Befehls, der das Unterbrechungssignal bewirkte, bereitzustellen.

8. Ein System nach einem der vorangehenden Ansprüche, bei dem das Steuermittel Mittel enthält, um einen Befehlsdatensatz einem Datensatz in einem Prozessor-Register zuzuordnen.

## Revendications

1. Système de traitement de données pour exécuter une séquence d'instructions, le système de traitement de données comprenant:
une pluralité de dispositifs de traitement (18A-18D), chacun pour exécuter des instructions;
un moyen (17) pour répartir les instructions vers l'un des dispositifs de traitement;
un moyen de commande (16) pour diriger l'exécution simultanée des instructions réparties dans la pluralité de dispositifs de traitement (18A-18D) quels que soient les emplacements des instructions dans la séquence, le moyen de commande comportant un moyen de manipulation d'interruptions pour recevoir un signal d'interruption d'instruction, et pour remettre à l'état initial la pluralité de dispositifs de traitement (18A-18D) et le moyen de répartition (17) à un état qui existait lorsque l'instruction qui avait conduit au signal d'interruption avait été exécutée antérieurement, afin de ré-exécuter la séquence d'instructions à partir de l'instruction qui avait conduit au signal d'interruption;
le système étant caractérisé en ce que le moyen de commande (16) comprend:
un ou plusieurs registres de réserve (30, 32, 34) pouvant être connectés aux registres correspondants (22, 24, 26) du dispositif de traitement dans au moins l'un desdits dispositifs de traitement (18A-18D), lesdits registres de réserve étant agencés pour stocker le contenu précédent des registres du dispositif de traitement si les contenus des registres du dispositif de traitement sont mis à jour lors de l'exécution des instructions;
un moyen de stockage (36) pour stocker des entrées (80) relatives aux instructions délivrées par le moyen de répartition (17), chaque entrée étant agencée pour comporter une information d'adresse pour une pluralité d'instructions délivrées simultanément par le moyen de répartition (17), et une indication du fait que des changements des contenus des registres (22, 24, 26) du dispositif de traitement se sont produits au cours de l'exécution de ladite pluralité d'instructions, l'information d'adresse comportant une adresse de base (82) indiquant l'adresse d'une première de la pluralité des instructions, et un champ de décalage (84) indiquant l'emplacement relatif à la première instruction de l'une quelconque de la pluralité des instructions qui pourrait générer un signal d'interruption;
le moyen (38) de manipulation des interruptions étant sensible à la réception d'un signal d'interruption pour accéder au moyen de stockage (36) afin d'obtenir l'adresse de l'instruction qui a conduit au signal d'interruption en utilisant les données du champ de décalage (84) comme décalages de l'adresse de base (82), puis pour fournir cette adresse à l'un des dispositifs de traitement (18A-18D);
le moyen de manipulation des interruptions conduisant aussi les contenus des registres de réserve (30, 32, 34) à être fournis à leurs registres correspondants (22, 24, 26) du dispositif de traitement si l'entrée du moyen de stockage (36) indique le fait que ces contenus des registres du dispositif de traitement ont été modifiés au cours de l'exécution de la pluralité d'instructions.

2. Système selon la revendication 1, dans lequel le moyen de commande (16) comprend en outre un moyen de purge pour effacer toute l'information dans les registres de réserve (30, 32, 34) et dans le moyen de stockage (36) avant la ré-exécution de la séquence d'instructions à partir de l'instruction qui a conduit au signal d'interruption.

3. Système selon la revendication 1 ou la revendication 2, dans lequel un champ d'instructions (86, 88) pour chacune de ladite pluralité d'instructions qui pouvaient générer un signal d'interruption est incluse dans l'entrée du moyen de stockage (36) pour fournir une indication du fait que des changements apportés aux contenus des registres du dispositif de traitement se sont produits au cours de l'exécution de ladite pluralité d'instructions.

4. Système selon l'une quelconque des revendications 1 à 3, dans lequel une entrée du moyen de stockage (36) est uniquement réalisée si une ou plusieurs de la pluralité d'instructions délivrées simultanément par le moyen de répartition (17) est d'un type qui pourrait générer un signal d'interruption.

5. Système selon l'une quelconque des revendications précédentes, comprenant en outre un moyen de suppression d'entrée pour , en étant sensible àla pluralité d'instructions complètes sans signal d'interruption généré, supprimer l'entrée associée dans le moyen de stockage (36) et les entrées associées dans les registres de réserve (30, 32, 34).

6. Système selon la revendication 5, dans lequel les entrées associées dans les registres de réserve (30, 32, 34) sont supprimées en incrémentant des pointeurs d'en-tête dans les registres de réserve.

7. Système selon l'une quelconque des revendications précédentes, dans lequel le moyen de manipulation des interruptions comporte un moyen additionneur pour combiner l'adresse de base (82) avec les données du champ de décalage (84) afin de fournir l'adresse de l'instruction conduisant au signal d'interruption.

8. Système selon l'une quelconque des revendications précédentes, dans lequel le moyen de commande comporte un moyen pour attribuer un enregistrement d'instruction à un enregistrement du registre de dispositif de traitement.
